# FASCICULE DE BREVET EUROPEEN

(11) **EP 0 689 959 B1**
(45) Date de publication et mention de la délivrance du brevet: **16.09.1998**
(21) Numéro de dépôt: 95401529.3
(22) Date de dépôt: 27.06.1995
(51) Int. Cl.: B60Q 1/068

(54) **Mécanisme à vis sans fin, pour commander la position dans un projecteur d'automobile**
Schneckenvorrichtung zur Positionierung in Fahrzeugscheinwerfer
Endless screw mechanism for position control in a vehicle headlamp

(30) Priorité: 28.06.1994 FR 9407940
(43) Date de publication de la demande: 03.01.1996
(73) Titulaire: VALEO VISION, 93000 Bobigny (FR)
(72) Inventeur: Billot, Gérard, F-93370 Montfermeil (FR)
(74) Mandataire: Le Forestier, Eric

(56) Documents cités:
- US-A- 4 689 725
- US-A- 5 161 877

## Description

L'invention concerne un mécanisme de transmission du type à roue et vis sans fin formant réducteur et renvoi d'angle.

Dans le domaine des projecteurs automobiles, un tel mécanisme est notamment utilisé dans les systèmes de correction d'assiette qui, par ajustement de la position du réflecteur à l'intérieur du boîtier de projecteur, permettent de régler l'orientation en site du faisceau produit par ce projecteur.

Ces correcteurs comportent un moyen d'entraînement, manuel ou motorisé, dont l'actionnement provoque le basculement dans un sens ou dans l'autre du réflecteur autour de son axe de pivotement via des moyens de liaison appropriés, généralement une tige menée, mobile axialement, dont une extrémité est reliée de manière articulée au réflecteur et dont l'autre extrémité est entraînée en translation par le mécanisme dont il est ici question.

Ce mécanisme de transmission comporte en entrée un arbre menant relié au moyen d'entraînement et en sortie la tige menée précitée. Il assure simultanément les fonctions de : transformation d'un mouvement de rotation (celui du moyen d'entraînement) en mouvement de translation (celui de la tige de liaison au réflecteur) ; réduction, afin de permettre un réglage très fin de la position de la tige mobile par démultiplication de l'entraînement ; et renvoi d'angle, l'axe de rotation du moyen d'entraînement étant généralement perpendiculaire à la direction de déplacement de la tige mobile. Un mécanisme de ce type est décrit par exemple dans le document US-A-4 689 725.

L'une des difficultés liées à l'emploi de ce type de mécanisme tient au fait qu'en fin de course de la tige il est absolument nécessaire d'éviter, notamment dans le cas d'un moyen d'entraînement motorisé, que la poursuite de la rotation de l'arbre menant ne provoque une rupture du système ou un "décloquage", c'est-à-dire une désolidarisation de la tige mobile d'avec le réflecteur, auquel celle-ci est généralement reliée par l'intermédiaire d'une rotule encliquetée au moment du montage du projecteur.

En second lieu, il est également indispensable, dans un tel mécanisme, de prévoir un moyen de rattrapage de jeu afin de permettre un réglage précis de la position de la tige sans course morte à chaque changement de sens de manoeuvre.

Enfin, compte tenu des sollicitations particulièrement sévères auxquelles sont soumis les projecteurs automobiles, ainsi que de leur longue durée de vie escomptée, il est indispensable que tous les organes qui les constituent présentent une étanchéité parfaite, tout particulièrement les organes mécaniques comportant des pièces mobiles telles que le mécanisme de transmission formant réducteur et renvoi d'angle.

L'un des buts de l'invention est de proposer un tel mécanisme de transmission formant réducteur et renvoi d'angle, qui réponde à ces diverses contraintes tout en offrant une structure mécaniquement simple, donc facile et peu coûteuse à industrialiser.

Le mécanisme réducteur et renvoi d'angle de l'invention est du type générique à roue et vis sans fin, comprenant un boîtier fermé logeant une vis engrenant avec une région périphérique dentée d'une roue conjuguée, la vis portant sur des paliers solidaires du boîtier et étant prolongée par un arbre menant faisant saillie du boîtier, et la roue comportant une région de noyau central avec un trou axial taraudé permettant le montage de la roue sur une tige filetée menée faisant également saillie du boîtier, de manière à transformer le mouvement de rotation rapide de l'arbre menant en un mouvement de translation lente de la tige filetée.

De façon caractéristique de l'invention, la région périphérique dentée est conformée en une jupe sensiblement cylindrique portant la denture et fendue par une pluralité de gorges traversantes allongées divisant cette jupe en un même nombre de zones, et le matériau de cette jupe présente une limite de déformation élastique suffisamment élevée pour permettre en cas de blocage de la tige filetée, notamment en fin de course de celle-ci, une flexion élastique desdites zones de la jupe permettant à cette dernière de s'effacer sous la contrainte appliquée par la vis à la denture, de manière à assurer un débrayage du système roue-vis lorsque le couple résistant vu de l'arbre menant dépasse un seuil prédéterminé.

Selon un certain nombre de caractéristiques subsidiaires avantageuses :
- les gorges fendant la jupe s'étendent dans une région d'entre-dent de la denture en suivant le fond de cet entre-dent ;
- en direction axiale, l'une des extrémités de la jupe est libre et l'autre extrémité est reliée à la région de noyau central par une paroi s'étendant dans un plan radial entre jupe et noyau ;
- la roue porte au moins un organe de rattrapage de jeu en forme de lame souple dont une extrémité est solidaire de la roue et l'autre extrémité, libre, vient en appui contre une région en vis-à-vis du boîtier et est élastiquement déformable sous l'effet d'une contrainte exercée axialement; cette lame souple est de préférence solidarisée à la roue à l'endroit de ladite paroi précitée s'étendant dans un plan radial entre jupe et noyau ;
- il est prévu des moyens d'encliquetage de la roue au boîtier, propres à immobiliser axialement la roue tout en autorisant librement la rotation de celle-ci ;
- le boîtier est réalisé sous forme de deux demi-coquilles assemblées le long d'une zone de contact continue s'étendant dans un plan sensiblement radial, et l'une des demi-coquilles porte, sur l'étendue de la zone de contact, une lèvre convexe coopérant avec une lèvre homologue de l'autre demi-coquille, ladite lèvre homologue de l'autre demi-coquille étant de préférence une lèvre sensiblement plane contre laquelle vient s'écraser la lèvre convexe de la demi-coquille en vis-à-vis lors de la fermeture du boîtier ;
- ledit seuil prédéterminé de couple résistant est d'environ 3 m.N ;
- le matériau de la jupe est un poly(oxyméthylène).

D'autres caractéristiques et avantages de l'invention apparaîtront à la lecture de la description détaillée ci-dessous, faite en référence aux dessins annexés.

La figure 1 est une vue en élévation, en coupe selon I-I de la figure 2, du mécanisme selon l'invention.

La figure 2 est une vue de face, en coupe selon II-II de la figure 1, de ce même mécanisme.

La figure 3 est une vue de face, prise selon III-III de la figure 6, de la roue dentée du mécanisme représenté aux figures 1 et 2.

La figure 4 est une vue de dos, selon IV-IV de la figure 6, de cette même roue.

La figure 5 est une vue de profil de cette même roue.

La figure 6 est une vue en coupe, selon VI-VI de la figure 3, de cette même roue.

La figure 7 est un détail de la partie supérieure de la coupe de la figure 6.

La figure 8a et 8b correspondent au détail repéré VIII sur la figure 1, et illustrent la manière dont l'étanchéité est obtenue à la fermeture du boîtier.

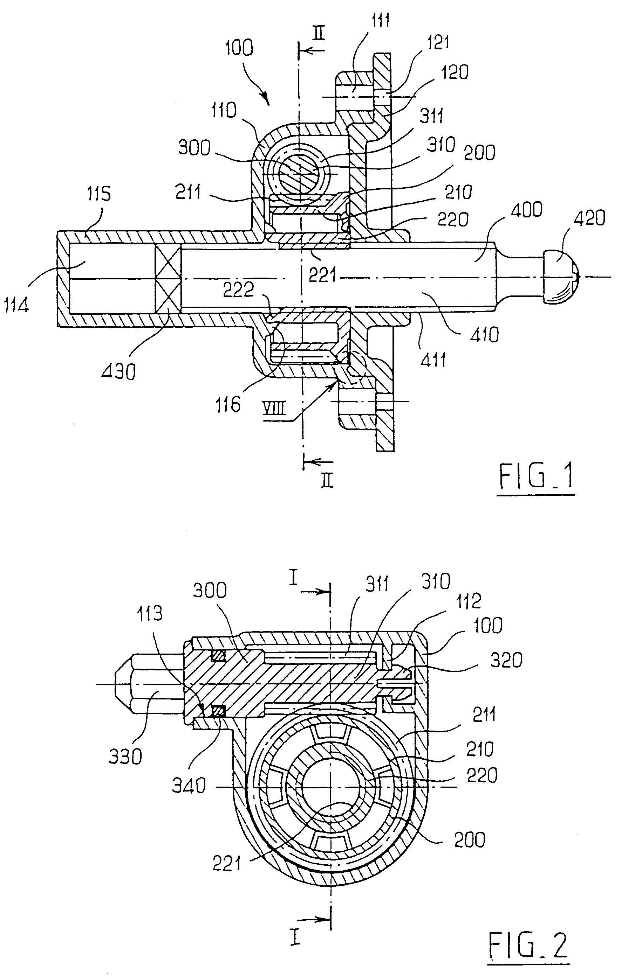

Sur la figure 1, la référence 100 désigne de façon générale le boîtier du mécanisme réducteur et renvoi d'angle de l'invention, qui est constitué de deux demi-coquilles 110, 120 assemblées l'une à l'autre par exemple par vissage, des vis étant alors introduites dans des orifices 111 de la demi-coquille 110 et pénétrant dans des orifices 121 en vis-à-vis, de plus petit diamètre, de la demi-coquille 120.

Ce boîtier renferme un ensemble à roue et vis sans fin de nature en elle-même classique, avec une roue dentée 200 dont une partie périphérique en forme de jupe 210 porte la denture 211. Cette denture 211 de la roue 200 vient en prise avec le(s) filet(s) 311 de la partie de vis 310 d'une pièce 300 formant vis sans fin, de forme générale cylindrique.

La pièce 300, outre la partie filetée centrale 310, porte à l'une de ses extrémités 320 un moyen d'encliquetage dans un logement 112 de la demi-coquille 110, l'ouverture de ce logement jouant le rôle de palier pour la pièce 300. A l'autre extrémité, la pièce 300 comporte une partie 330 formant arbre menant, par exemple une tête hexagonale qui peut être reliée à un moteur électrique, un bouton de manoeuvre, un flexible de commande, etc. La partie de la pièce 300 adjacente à l'arbre menant 330 repose dans un évidement cylindrique 113 de la demi-coquille 110 qui joue le rôle de palier, un joint torique 340 assurant l'étanchéité du mécanisme à cet endroit.

On voit ainsi que l'entraînement en rotation de l'arbre menant 330 va provoquer une rotation corrélative de la roue conjuguée 200, avec à la fois réduction (la roue tournant plus lentement que la vis) et renvoi d'angle, les axes respectifs de l'arbre menant et de la roue étant perpendiculaires.

Ce mécanisme entraîne une tige menée 400, qui est par exemple la tige de commande du correcteur d'assiette d'un projecteur automobile.

A cet effet, la tige menée est filetée en 411 dans sa partie centrale 410, tandis que son extrémité saillante 420 est par exemple configurée en forme de rotule encliquetable dans un logement homologue du réflecteur du projecteur automobile dont on souhaite ajuster l'orientation ; l'extrémité opposé 430 sert au guidage de la tige par coulissement dans un logement coopérant 114, cylindrique, formé dans une partie arrière 115 de la demi-coquille 110.

Le filetage 411 de la tige 400 vient en prise avec un taraudage 221 d'un trou axial formé dans une région centrale 220, ou région de noyau, de la roue 200. De cette manière, l'ensemble vis-écrou formé par la tige filetée 400 et la roue 200 permet une translation axiale de la tige 400, dans un sens ou dans l'autre en fonction du sens de rotation de la roue 200, elle-même entraînée par la vis sans fin 300. Tout mouvement de rotation appliqué à l'arbre menant 330 de la vis sans fin 300 se traduit ainsi par une translation axiale de la tige menée 400, avec un effet de démultiplication important permettant d'ajuster de façon très précise la position de cette tige 400.

Toutefois, lorsque la tige arrive, dans un sens ou dans l'autre, en fin de course, le couple résistant vu de l'arbre mené augmente brusquement de sorte que, si aucune précaution n'est prise, il se produit soit un blocage et une rupture d'un élément du mécanisme, soit un "décloquage", c'est-à-dire une désolidarisation de la rotule 420 d'avec son logement homologue du boîtier du réflecteur (dans le cas d'une sollicitation de la tige vers la gauche, avec les conventions de la figure 1, et en supposant que le réflecteur arrive en butée avant que l'extrémité 430 n'atteignent le fond du logement 114).

L'un des buts de la présente invention est de permettre, dans un tel cas de figure, un débrayage du mécanisme dès que le couple résistant dépasse une valeur prédéterminée, par exemple une valeur de 3 m.N (cette valeur n'étant bien entendu qu'une valeur purement indicative).

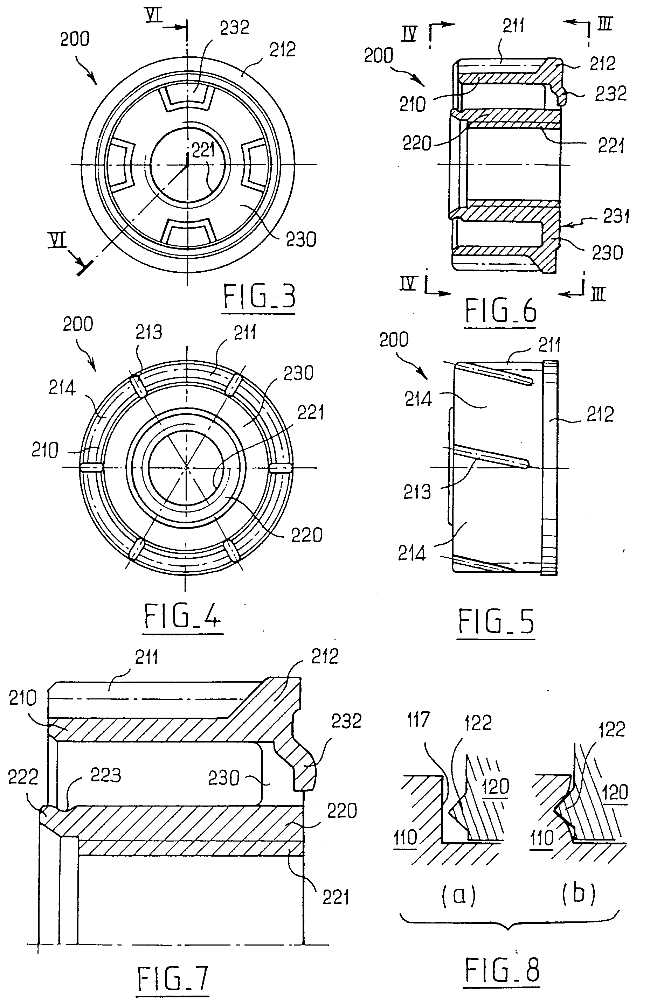

Pour ce faire, on donne à la roue 200 la structure illustrée figures 3 à 6 (les mêmes références numériques désignant des éléments semblables d'une figure à l'autre).

Comme on l'a exposé plus haut, la jupe cylindrique 210 porte à sa périphérie extérieure la denture 211 qui vient engrener avec la vis sans fin. Cette denture est, en direction axiale, formée sur la majeure partie de la longueur de la roue, à l'exception d'une partie frontale 212 qui forme un rebord périphérique saillant.

La région portant la denture 211 est, quant à elle, fendue par des gorges 213 s'étendant sensiblement dans une région d'entre-dent de cette denture 211 en suivant le fond de cet entre-dent et divisant la région de la jupe 210 portant la denture en une pluralité de secteurs égaux 214, par exemple six secteurs semblables comme illustré sur les figures, bien que ce nombre ne soit aucunement limitatif. Les fentes 213 s'étendent sur toute l'épaisseur de la jupe 210, qu'elle traverse de part en part, et, dans le sens de leur longueur, s'étendent depuis la partie arrière de la roue (celle représentée à gauche sur les figures 1, 5 et 6) et jusqu'à la région de rebord périphérique 212 du côté opposé. La région périphérique 212 assure ainsi la solidarisation entre eux des différents secteurs 214, dont l'autre extrémité est libre.

Par ailleurs, le matériau de la roue est choisi de manière à être élastiquement déformable en cas d'application d'une contrainte de flexion, par exemple en choisissant un matériau tel qu'un poly(oxyméthylène) ou POM, susceptible en cas de déformation de reprendre sa forme initiale après suppression de la contrainte.

On comprend aisément que, grâce à cette configuration, en cas de blocage de la tige 400 -et donc de la roue 200- la poursuite de la rotation de la vis sans fin 300 provoque une flexion, en direction de l'axe de la roue 200, de l'extrémité libre du secteur 214 en contact avec le(s) filet(s) de la vis sans fin 300. Cette flexion permet ainsi à ce secteur de s'effacer sous la contrainte appliquée par cette vis à la denture qu'il porte. On réalise ainsi de manière simple un débrayage du système roue-vis lorsque le couple résistant vu de l'arbre menant dépasse un seuil prédéterminé, fonction d'une part de la géométrie de la vis et, surtout, de celle de la roue -notamment les dimensions des gorges 213 et des secteurs 214- et d'autre part des caractéristiques mécaniques, notamment la constante d'élasticité à la flexion, du matériau utilisé pour la roue.

Après suppression de la contrainte, le secteur 214 en contact avec le(s) filet(s) de la vis retourne à sa forme d'origine, ce qui lui permet de revenir engrener avec la vis 300. Le débrayage est donc totalement réversible.

Une autre fonction qu'il est possible de mettre en oeuvre par une configuration particulière de la roue 200 est un rattrapage du jeu axial de cette roue.

En effet, une fois la roue 200 montée sur la tige filetée 400 et immobilisée à l'intérieur du boîtier 100, il subsiste après fermeture des deux demi-coquilles 110 et 120 un jeu axial de l'ensemble tige 400/roue 200 à l'intérieur du boîtier 100, ce jeu étant dû aux tolérances de fabrication et au choix des cotes fonctionnelles ; on peut en revanche considérer que le jeu entre la tige 400 et la roue 200 est négligeable en comparaison, si l'on réalise ces pièces avec des choix dimensionnels et de tolérance appropriés pour le filet et le taraudage associé.

Pour rattraper le jeu subsistant, on prévoit avantageusement, sur la région de flasque 230 reliant la jupe extérieure 210 au noyau central 220 (voir notamment les figures 6 et 7) une pluralité de lames souples 232 légèrement saillantes par rapport à la face 231 du flasque en contact avec la paroi en vis-à-vis du boîtier. Ces lames 232 sont par exemple au nombre de quatre (comme illustré sur la figure 3), mais ce nombre n'est bien entendu aucunement limitatif. De la même façon, ces lames 232 ont été, sur les figures, représentées reliées à la roue au voisinage de la jupe extérieure 210, la partie tournée vers le noyau central 220 étant libre, mais cette configuration n'est aucunement limitative, la configuration inverse étant tout aussi bien envisageable ainsi que d'autres configurations, par exemple dans lesquelles la liaison avec le reste de la pièce se ferait le long d'un rayon de la roue, la lame s'étendant alors tangentiellement, etc.

Ces lames 232, compte tenu de la nature élastiquement déformable du matériau de la roue (par exemple un POM comme indiqué plus haut) vont venir, du fait de leur élasticité, plaquer la roue contre la face d'appui du boîtier situé du côté opposé, c'est-à-dire la face d'appui de la demi-coquille 110, du côté gauche avec les conventions de la figure 1.

Sur cette face d'appui, il peut être avantageusement prévu, pour faciliter l'assemblage du mécanisme, des moyens d'encliquetage de la roue au boîtier, le noyau 220 de la roue 200 comportant par exemple, comme cela est visible sur la figure 7, un épaulement 222 définissant une gorge périphérique 223 ; comme on peut le voir sur la figure 1, cette gorge 223 coopère avec un élément homologue en saillie 116 de la demi-coquille 110 du boîtier 100 ; cet organe peut être par exemple réalisé sous forme de secteurs distincts ou d'une zone circulaire complète en contre-dépouille, la roue se montant sans serrage dans le fond de la demi-coquille 110, par simple encliquetage.

Enfin, il est avantageusement prévu des moyens permettant d'assurer une étanchéité entre les deux demi-coquilles 110 et 120 au moment de la fermeture du boîtier, par exemple en configurant ces deux pièces de la manière illustrée sur les figures 8a et 8b, respectivement avant et après serrage.

Le contour périphérique de la zone de contact de ces deux pièces est une zone continue formée, du côté de la demi-coquille 110, d'une région plane 117 et, du côté de la demi-coquille 120, d'une lèvre en saillie 122 (la configuration inverse étant bien entendu possible). La lèvre saillante 122 est par exemple une lèvre triangulaire qui, compte tenu de la nature du matériau du boîtier (une matière plastique) va venir pénétrer la zone plate 117 et se déformer avec écrasement au moment du serrage des deux pièces, assurant ainsi une étanchéité permanente et continue sur toute la longueur de la zone de contact.

## Revendications

1. Un mécanisme réducteur et renvoi d'angle du type à roue et vis sans fin, notamment pour des ensembles de commande mécanique de la position d'éléments de projecteur automobile, ce mécanisme comprenant un boîtier fermé (100) logeant une vis (300) engrenant avec une région périphérique dentée d'une roue conjuguée (200), la vis portant sur des paliers (112, 113) solidaires du boîtier et étant prolongée par un arbre menant (330) faisant saillie du boîtier, et la roue (200) comportant une région de noyau central (220) avec un trou axial taraudé (221) permettant le montage de la roue sur une tige filetée menée (400) faisant également saillie du boîtier, de manière à transformer le mouvement de rotation rapide de l'arbre menant en un mouvement de translation lente de la tige filetée,
caractérisé en ce que la région périphérique dentée est conformée en une jupe (210) sensiblement cylindrique portant la denture (211) et fendue par une pluralité de gorges traversantes allongées (213) divisant cette jupe en un même nombre de zones (214), et en ce que le matériau de cette jupe présente une limite de déformation élastique suffisamment élevée pour permettre en cas de blocage de la tige filetée, notamment en fin de course de celle-ci, une flexion élastique desdites zones de la jupe permettant à cette dernière de s'effacer sous la contrainte appliquée par la vis à la denture, de manière à assurer un débrayage du système roue-vis lorsque le couple résistant vu de l'arbre menant dépasse un seuil prédéterminé.

2. Le mécanisme réducteur et renvoi d'angle de la revendication 1, dans lequel les gorges (213) fendant la jupe s'étendent dans une région d'entre-dent de la denture en suivant le fond de cet entre-dent.

3. Le mécanisme réducteur et renvoi d'angle de la revendication 1, dans lequel, en direction axiale, l'une des extrémités de la jupe est libre et l'autre extrémité est reliée à la région de noyau central par une paroi (230) s'étendant dans un plan radial entre jupe et noyau.

4. Le mécanisme réducteur et renvoi d'angle de la revendication 1, dans lequel la roue porte au moins un organe de rattrapage de jeu (232) en forme de lame souple dont une extrémité est solidaire de la roue et l'autre extrémité, libre, vient en appui contre une région en vis-à-vis du boîtier et est élastiquement déformable sous l'effet d'une contrainte exercée axialement.

5. Le mécanisme réducteur et renvoi d'angle des revendications 3 et 4 prises en combinaison, dans lequel la lame souple (232) est solidarisée à la roue à l'endroit de ladite paroi (230) s'étendant dans un plan radial entre jupe et noyau.

6. Le mécanisme réducteur et renvoi d'angle de la revendication 1, dans lequel il est prévu des moyens (222, 223, 116) d'encliquetage de la roue au boîtier, propres à immobiliser axialement la roue tout en autorisant librement la rotation de celle-ci.

7. Le mécanisme réducteur et renvoi d'angle de la revendication 1, dans lequel le boîtier (100) est réalisé sous forme de deux demi-coquilles (110, 120) assemblées le long d'une zone de contact continue s'étendant dans un plan sensiblement radial, et l'une (120) des demi-coquilles porte, sur l'étendue de la zone de contact, une lèvre convexe (122) coopérant avec une lèvre homologue de l'autre demi-coquille.

8. Le mécanisme réducteur et renvoi d'angle de la revendication 7, dans lequel ladite lèvre homologue (117) de l'autre (110) demi-coquille est une lèvre sensiblement plane contre laquelle vient s'écraser la lèvre convexe de la demi-coquille en vis-à-vis lors de la fermeture du boîtier.

9. Le mécanisme réducteur et renvoi d'angle de la revendication 1, dans lequel ledit seuil prédéterminé de couple résistant est d'environ 3 m.N.

10. Le mécanisme réducteur et renvoi d'angle de la revendication 1, dans lequel le matériau de la jupe est un poly(oxyméthylène).

## Claims

1. A reduction and angle transmission mechanism of the type having a wheel and endless screw, especially for units for mechanically controlling the position of an automotive headlamp, this mechanism comprising a closed housing (11) containing a screw (300) meshing with a toothed peripheral region of a mating wheel (200), the screw resting on bearings (112, 113) integral with the housing and being extended by a primary shaft (330) projecting from the housing, and the wheel (200) comprising a central core region (220) with a tapped axial hole (221) allowing the mounting of the wheel on a driven threaded rod (400) also projecting from the housing, so as to transform the fast rotational movement of the primary shaft into a slow translational movement of the threaded rod,
**characterised in that** the toothed peripheral region is formed as a substantially cylindrical skirt (210) bearing the toothing (211) and divided by a plurality of elongated through-grooves (213), dividing this skirt into the same number of zones (214), **and in that** the material of this skirt has a sufficiently high limit of elasticity to enable, in the event of the obstruction of the threaded rod, especially at the end of its travel, an elastic deflection of the said zones of the skirt enabling said skirt to move sideways under the stress applied by the screw to the toothing, so as to ensure a throwout of the wheel-screw system when the load moment considering the primary shaft exceeds a predetermined threshold.

2. The reduction and angle transmission mechanism of Claim 1, in which the grooves (213) dividing the skirt extend in a tooth space region of the toothing following the bottom of this tooth space.

3. The reduction and angle transmission mechanism of Claim 1, in which, in the axial direction, the one of the ends of the skirt is free and the other end is connected to the central core region by a wall (230) extending in a radial plane between skirt and core.

4. The reduction and angle transmission mechanism of Claim 1, in which the wheel bears at least one backlash elimination element (232) shaped as a flexible lug, one end of which is integral with the wheel and the other free end of which comes to rest against an opposite region of the housing and is elastically deformable under the effect of an axially exerted stress.

5. The reduction and angle transmission mechanism of Claims 3 and 4 taken in combination, in which the flexible lug (232) is connected to the wheel at the site of the said wall (230) extending in a radial plane between skirt and core.

6. The reduction and angle transmission mechanism of Claim 1, in which means (222, 223, 116) for latching the wheel to the housing are provided, which are capable of axially immobilising the wheel whilst freely permitting the rotation thereof.

7. The reduction and angle transmission mechanism of Claim 1, in which the housing (100) is produced in the form of two half-shells (110, 120) joined along a continuous contact zone extending in a substantially radial plane, and one (120) of the half-shells bears, over the length of the contact zone, a convex lip (122) cooperating with a similar lip of the other half-shell.

8. The reduction and angle transmission mechanism of Claim 7, in which the said similar lip (117) of the other half-shell (110) is a substantially flat lip against which the convex lip of the opposite half-shell comes to be crushed when the housing is closed.

9. The reduction and angle transmission mechanism of Claim 1, in which the said predetermined load moment threshold is roughly 3 m.N.

10. The reduction and angle transmission mechanism of Claim 1, in which the material of the skirt is a poly(oxymethylene).

## Patentansprüche

1. Untersetzungs- und Winkeltriebvorrichtung in der Ausführung mit Rad und Schnecke, insbesondere für Einheiten zur mechanischen Positionierung von Elementen eines Kraftfahrzeugscheinwerfers, wobei diese Vorrichtung ein geschlossenes Gehäuse (100) umfaßt, das eine Schnecke (300) enthält, die mit einem gezahnten Umfangsbereich eines zugehörigen Rads (200) im Eingriff steht, wobei die Schnecke auf fest mit dem Gehäuse verbundenen Lagern (112, 113) aufliegt und durch eine treibende Welle (300) verlängert wird, die aus dem Gehäuse vorsteht, und wobei das Rad (200) einen mittigen Kernbereich (220) mit einer axialen Gewindebohrung (221) umfaßt, die die Anbringung des Rads auf einer getriebenen Gewindestange (400) ermöglicht, die ebenfalls aus dem Gehäuse vorsteht, um die schnelle Drehbewegung der treibenden Welle in eine langsame geradlinige Bewegung der Gewindestange umzuwandeln,
**dadurch gekennzeichnet,** daß der gezahnte Umfangsbereich als eine in etwa zylindrische Einfassung (210) ausgebildet ist, die die Zahnung (211) trägt und die durch eine Mehrzahl von durchgehenden länglichen Auskehlungen (213) zerteilt ist, die diese Einfassung in eine entsprechende Anzahl von Zonen (214) unterteilen, und daß der Werkstoff dieser Einfassung eine ausreichend hohe elastische Verformungsgrenze aufweist, um im Falle einer Blockierung der Gewindestange, insbesondere in deren Endstellung, eine elastische Biegung der besagten Zonen der Einfassung zu ermöglichen, damit diese sich unter der durch die Schnecke auf die Zahnung ausgeübten Belastung wegbewegen kann, um ein Ausrücken des Schneckenradtriebs herbeizuführen, wenn das Widerstandsmoment seitens der treibenden Welle einen vorbestimmten Schwellenwert überschreitet.

2. Untersetzungs- und Winkeltriebvorrichtung nach Anspruch 1, bei der sich die Auskehlungen (213), die die Einfassung zerteilen, in einem Zahnzwischenraumbereich der Zahnung erstrecken, wobei sie dem Boden dieses Zahnzwischenraums folgen.

3. Untersetzungs- und Winkeltriebvorrichtung nach Anspruch 1, bei der in axialer Richtung eines der Enden der Einfassung frei ist und das andere Ende mit dem mittigen Kernbereich durch eine Wand (230) verbunden ist, die sich in einer radialen Ebene zwischen Einfassung und Kern erstreckt.

4. Untersetzungs- und Winkeltriebvorrichtung nach Anspruch 1, bei der das Rad mindestens ein Spielausgleichorgan (232) in Form einer biegsamen Lamelle trägt, deren erstes Ende fest mit dem Rad verbunden ist und deren freies anderes Ende an einem gegenüberliegenden Bereich des Gehäuses zur Anlage kommt und unter der Einwirkung einer axial ausgeübten Belastung elastisch verformbar ist.

5. Untersetzungs- und Winkeltriebvorrichtung nach den Ansprüchen 3 und 4 in Kombination, bei der die biegsame Lamelle (232) mit dem Rad an der Stelle der besagten Wand (230) fest verbunden ist, die sich in einer radialen Ebene zwischen Einfassung und Kern erstreckt.

6. Untersetzungs- und Winkeltriebvorrichtung nach Anspruch 1, bei der Rastmittel (222, 223, 116) zur Verrastung des Rads am Gehäuse vorgesehen sind, die das Rad axial sichern können und gleichzeitig seine freie Drehung ermöglichen.

7. Untersetzungs- und Winkeltriebvorrichtung nach Anspruch 1, bei der das Gehäuse (100) in Form von zwei Halbschalen (110, 120) ausgeführt ist, die entlang einer durchgehenden Kontaktzone zusammengefügt sind, die sich in einer in etwa radialen Ebene erstreckt, wobei eine (120) der Halbschalen auf der Ausdehnung der Kontaktzone eine konvexe Lippe (122) trägt, die mit einer entsprechenden Lippe der anderen Halbschale zusammenwirkt.

8. Untersetzungs- und Winkeltriebvorrichtung nach Anspruch 7, bei der die besagte entsprechende Lippe (117) der anderen (110) Halbschale eine in etwa ebene Lippe ist, an der die konvexe Lippe der gegenüberliegenden Halbschale beim Schließen des Gehäuses eingedrückt wird.

9. Untersetzungs- und Winkeltriebvorrichtung nach Anspruch 1, bei der der besagte vorbestimmte Schwellenwert des Widerstandsmoments etwa 3 m.N beträgt.

10. Untersetzungs- und Winkeltriebvorrichtung nach Anspruch 1, bei der der Werkstoff der Einfassung ein Polyoxymethylen ist.
